Europäisches Patentamt

European Patent Office

Office européen des brevets

(11) Veröffentlichungsnummer: **0 029 600**
**B1**

(12) **EUROPÄISCHE PATENTSCHRIFT**

(45) Veröffentlichungstag der Patentschrift:
08.08.84

(51) Int. Cl.³: **B 01 D 53/22,** B 01 D 13/00

(21) Anmeldenummer: **80107280.2**

(22) Anmeldetag: **21.11.80**

(54) **Verfahren zur Trennung von Fluiden durch Permeation.**

(30) Priorität: **22.11.79 DE 2947089**

(43) Veröffentlichungstag der Anmeldung:
**03.06.81 Patentblatt 81/22**

(45) Bekanntmachung des Hinweises auf die Patenterteilung:
**08.08.84 Patentblatt 84/32**

(84) Benannte Vertragsstaaten:
**AT BE CH DE FR GB IT LI NL SE**

(56) Entgegenhaltungen:
DE - A - 1 619 749
DE - A - 2 159 899
DE - A - 2 528 868
DE - B - 1 167 797
DE - B - 1 217 341
DE - B - 1 243 649
DE - C - 728 858
DE - C - 729 548
US - A - 2 540 151
US - A - 3 208 197
US - A - 4 104 037

(73) Patentinhaber: **Carl Still GmbH & Co. KG, Kaiserwall 21, D-4350 Recklinghausen (DE)**

(72) Erfinder: **Michele, Helmut, Dr.-Ing., Egilmarstrasse 23, D-4600 Dortmund (DE)**
Erfinder: **Schulz, Günter, Weidenbohrerweg 31, D-4600 Dortmund (DE)**
Erfinder: **Werner, Udo, Prof. Dr. Ing., Halterner Strasse 67, D-4350 Recklinghausen (DE)**

(74) Vertreter: **Meyer, Alfred, Dipl.-Ing. Dr. jur., Schwanenmarkt 10, D-4000 Düsseldorf 1 (DE)**

**Beschreibung**

Die Erfindung betrifft ein Verfahren zur Trennung von Fluiden durch Permeation in zwei Alternativen, wie sie in den Oberbegriffen der Ansprüche 1 und 2 beschrieben sind.

Mit einem derartigen Verfahren können Fluide in Form von Flüssigkeiten, Gasen, Lösungen oder Dispersionen behandelt werden. Als durchlässige Wand verwendet man eine Membran aus geeignetem Material, zum Beispiel in Form einer Kunststoff-Folie. Zu den bekannten Anwendungen eines solchen Verfahrens gehört zum Beispiel das Trennen von Helium und Erdgas. Auch auf dem Gebiet der Sauerstoffanreicherung oder der Urananreicherung läßt sich ein derartiges Verfahren verwenden. Bei einer anderen Anwendung können unter Ausnutzung des Prinzips der Umkehrosmose Salzbestandteile des Meerwassers zum Zweck der Trinkwassererzeugung ausgeschieden werden. Hierzu ist allerdings ein verhältnismäßig großer Energieaufwand erforderlich, da Druckwerte zwischen 50 und 100 bar erzeugt werden müssen.

Es ist aus der DE-C-1 243 649 eine zur Anwendung eines derartigen Verfahrens geeignete Anlage bekannt, die in zwei unterschiedlichen Schaltzuständen betrieben werden kann. Während des ersten Schaltzustandes erfolgt keine Rückführung des aus dem Permeatteil abgezogenen Bestandteils in den Zulaufteil derselben Permeationsstufe. Vielmehr wird mit Hilfe von Ventilen eine solche Schaltung vorgegeben, daß der aus der ersten Permeationsstufe mittels eines Kompressors abgezogene Bestandteil insgesamt dem Zulaufteil der zweiten Permeationsstufe zugeführt wird. Erst nach Durchlaufen desselben erfolgt eine Rückführung dieses Bestandteils zu dem Zulaufteil der ersten Permeationsstufe. Die Erfindung ging von einem diesem Schaltzustand entsprechenden Verfahren aus.

Im zweiten Schaltzustand der bekannten Anlage erfolgt zwar eine teilweise Rückführung des abgezogenen Bestandteils in den Zulaufteil der ersten Permeationsstufe. In diesem Schaltzustand ist jedoch die zweite Permeationsstufe überhaupt nicht in Betrieb.

Es sind ferner beispielsweise aus der US-A-2 540 151 sogenannte Kaskadenschaltungen bekannt. Bei diesen sind eine Anzahl von Permeationsstufen in Form von Membranmodulen kaskadenförmig hintereinander geschaltet.

Allen bekannten Anlagen ist der Nachteil gemeinsam, daß die erforderlichen Austauschflächen relativ groß sein müssen und daß auch der Betrieb dieser Anlagen sehr energieaufwendig ist. Ursache hierfür ist unter anderem die Notwendigkeit, verhältnismäßig große Fluidmengen umwälzen zu müssen, und zwar mit einer großen Anzahl von Förderorganen.

Hiervon ausgehend war es Aufgabe der vorliegenden Erfindung, die Größe der notwendigen Membranflächen und die jeweils für die Förderorgane erforderliche Leistung weiter herabzusetzen und dadurch den technischen Aufwand zu verringern.

Diese Aufgabe wird gemäß einem ersten Vorschlag der Erfindung dadurch gelöst, daß der entnommene Teil des stärker permeierenden Bestandteils in den Zulaufteil einer zweiten Permeationsstufe geleitet wird und daß das Permeat in der zweiten Permeationsstufe ebenfalls im Gegenstrom an der Wand dieser Stufe entlanggeführt und teilweise über ein Förderorgan in den Zulaufteil der zweiten Permeationsstufe zurückgeführt und teilweise als Produkt entnommen wird.

Gemäß dem zweiten Vorschlag der Erfindung läßt sich die gestellte Aufgabe aber auch dadurch lösen, daß der entnommene Teil des stärker permeierenden Bestandteils den Zulaufteil einer zweiten Permeationsstufe geleitet und von diesem aus in den Zulaufteil der ersten Permeationsstufe zurückgeführt wird, daß dem Permeatteil der zweiten Permeationsstufe eine dritte Permeationsstufe nachgeschaltet ist, deren Permeatteil der stärker permeierende Bestandteil entnommen wird, und daß der Zulaufteil der dritten Permeationsstufe ausgangsseitig mit dem Ausgang des Permeatteils der ersten Permeationsstufe verbunden ist.

Durch die Anwendung des erfindungsgemäßen Verfahrens in den beiden Alternativen läßt sich der für die Trennung von Fluiden erforderliche technische Aufwand erheblich herabsetzen. Zur Erzielung bestimmter Trennleistungen sind wesentlich geringere Austauschflächen ausreichend. Es ergibt sich deshalb ein entsprechend vereinfachter Anlagenaufbau. Insbesondere wird gegenüber allen bekannten Anlagen eine geringere Förderleistung benötigt, was zu einer entsprechend schwächeren Auslegung einzelner Förderorgane und/oder zu einer geringeren Anzahl derselben führt. Sowohl hierdurch als auch durch die Tatsache, daß zur Erzielung der gewünschten Trennleistung geringere Fluidmengen gefördert werden müssen, ergibt sich eine bemerkenswerte Energieeinsparung. Vorteilhaft ist es ferner, daß das vorgeschlagene Verfahren grundsätzlich auch für mehr als zwei Endprodukte oder Zwischenprodukte sowie für mehr als zwei Fluide oder Fluidbestandteile von jeweils unterschiedlicher Konzentration verwendbar ist.

Das der zweiten Alternative entsprechende Verfahren ist insbesondere dann in günstiger Weise anwendbar, wenn besonders hohe Konzentrationswerte zumindest eines Endproduktes erreicht werden sollen. Diese lassen sich nämlich hierbei mit verhältnismäßig sehr kleinen Austauschflächen und niedrigen umgewälzten Fluidmengen erzielen. Der vorgeschlagenen Ausbildung einer entsprechenden Anlage liegt die Erkenntnis zugrunde, daß nach Erreichen einer bestimmten Anfangskonzentration in der ersten und zweiten Permeationsstufe die Anwendung der dritten Permeationsstufe in der vorgeschlagenen Schaltungsweise zu einer Erhöhung der Wirtschaftlichkeit führt, die durchaus als überraschend groß bezeichnet werden kann.

Die einzelnen Permeationsstufen können jeweils aus einer beliebigen Anzahl von zusammengeschalteten Einzelmodulen bestehen, derart, daß die jeweils für eine Permeationsstufe erforderliche Gesamt-Austauschfläche aus einer entsprechenden Anzahl von Einzelmodulen gebildet wird.

Nachfolgend werden einige vorteilhafte Ausgestaltungen der Erfindung beschrieben, von denen eine darin besteht, daß das Fluid zwischen den hintereinander geschalteten Zulaufteilen der Einzelmodule einer Permeationsstufe dort zugeführt wird, wo die Konzentration des im Umlauf befindlichen Fluids etwa der Konzentration der zugeführten Fluidbestandteile entspricht.

Jeweils bezogen auf eine bestimmte Trennleistung ergibt sich hierdurch eine weitere Verringerung des zu fördernden Fluid-Volumens. Auch läßt sich die Größe der benötigten Wand- bzw. Austauschflächen weiter herabsetzen. Dies ist deshalb möglich, weil durch die besondere Wahl der Zuführungsstelle die in der Anlage vorhandene Konzentration so wenig wie möglich gestört wird.

Günstig ist es erfindungsgemäß ferner, wenn der aus dem Zulaufteil der zweiten Permeationsstufe abgezogene Fluidstrom in den Zulaufteil der ersten Permeationsstufe zurückgeführt wird.

Bei einer Verdoppelung der Zahl an Permeationsstufen wird man zwar im allgemeinen ein zusätzliches Förderorgan benötigen; dies wird aber durch eine besonders starke Verringerung des umzuwälzenden Fluidvolumens und der erforderlichen Austauschfläche mehr als ausgeglichen.

Eine weitere vorteilhafte Ausgestaltung des erfindungsgemäßen Verfahrens besteht darin, daß zwei jeweils aus mehreren hintereinander geschalteten Permeatstufen gebildete Anlagenteile so miteinander verbunden werden, daß der nicht in den Zulaufteil einer Permeationsstufe im ersten Anlagenteil zurückgeführte Fluidstrom in die Hintereinanderschaltung der dem zweiten Anlagenteil zugeordneten Zulaufteile dort zugeführt wird, wo die Konzentration des im Umlauf befindlichen Fluids etwa der Konzentration der zugeführten Fluidbestandteile in den Zulaufteilen dieses zweiten Anlagenteils entspricht.

Es ergeben sich hierdurch zunächst dieselben Vorteile, wie sie zuvor für die Anwendung dieser Maßnahme bei nur einem Anlagenteil beschrieben wurden. Ferner kann man bei in der beschriebenen Weise aufgebauten zweiteiligen Anlagen in besonders günstiger Weise gegebenenfalls auch noch ein drittes Produkt oder Zwischenprodukt am Ende der hintereinander geschalteten Zulaufteile des zweiten Anlagenteils entnehmen.

In diesem Zusammenhang ist es erfindungsgemäß ferner denkbar, daß der an den Zulaufteilen des zweiten Anlagenteils abgenommene Fluidstrom in die Hintereinanderschaltung der Zulaufteile des ersten Anlagenteils dort zurückgeführt wird, wo die Konzentration des im Umlauf befindlichen Fluids in den Zulaufteilen des ersten Anlagenteils etwa der Konzentration der in diesem Fluidstrom enthaltenen Bestandteile entspricht.

Die hier vorgeschlagenen Maßnahmen gelten entsprechend auch bei einem drei- oder mehrteiligen Aufbau einer Anlage.

Insbesondere führt die Durchführung des erfindungsgemäßen Verfahrens entsprechend der zweiten Alternative ist es ferner vorteilhaft, wenn der aus dem Permeatteil einer ersten Permeationsstufe oder eines ersten Anlagenteils abgezogene Fluidstrom zumindest teilweise über den Zulaufteil einer Zusatzstufe in den Zulaufteil der ersten Permeationsstufe oder eines ersten Anlagenteils zurückgeführt wird, wenn das in der Zusatzstufe anfallende Permeat in den Zulaufteil einer zweiten Permeationsstufe oder eines zweiten Anlagenteils eingespeist wird und wenn der aus dem letztgenannten Zulaufteil abgezogene weniger permeierende Bestandteil dem Zulaufteil der ersten Permeationsstufe oder des ersten Anlagenteils zugeführt wird. Hierbei können die jeweiligen Einspeisungsstellen in hintereinander geschaltete Zulaufteile eines Anlagenteils in bezug auf die Konzentrationen des dort vorhandenen Fluids und des zugeführten bzw. rückgeführten Fluids so gewählt werden, wie es im Zusammenhang mit zuvor erläuterten Verfahrensmaßnahmen bereits beschrieben wurde.

Für bestimmte Anwendungen des vorgeschlagenen Verfahrens ergeben sich weitere Vorteile, wenn die einzelnen Permeationsstufen durchlässige Wände mit unterschiedlichen Permeabilitätseigenschaften aufweisen. Hierzu wird erfindungsgemäß weiterhin vorgeschlagen, daß mindestens zwei Permeationsstufen oder aus jeweils mehreren Permeationsstufen gebildete Anlagenteile vorgesehen sind und daß in den Permeationsstufen oder Anlagenteilen enthaltene durchlässige Wände unterschiedliche Permeabilitätseigenschaften haben, derart, daß jeweils für unterschiedliche Bestandteile des Fluids eine stärkere Permeabilität vorhanden ist.

Dies läßt sich im Rahmen des von der Erfindung vorgeschlagenen Verfahrens in besonders günstiger Weise verwirklichen, wenn zwei Permeatstufen oder aus mehreren Permeatstufen aufgebaute Anlagenteile mit einer ersten und einer zweiten Permeabilität der durchlässigen Wände vorgesehen sind, derart, daß jeweils für unterschiedliche Bestandteile des Fluids eine stärkere Permeabilität vorhanden ist, wenn der Permeatteil der Permeationsstufe oder des Anlagenteils mit der ersten Permeabilität über ein Förderorgan mit dem Zulaufteil der zweiten Permeationsstufe oder des zweiten Anlagenteils mit der zweiten Permeabilität verbunden ist und wenn die Permeatseite der zweiten Permeationsstufe oder des zweiten Anlagenteils über ein weiteres Förderorgan mit dem Zulaufteil der ersten Permeatstufe oder des ersten Anlagenteils in Verbindung stehen, wobei die Produktströme jeweils an den Enden der Zulaufteile abgezogen werden.

Dies bedeutet mit anderen Worten, daß im Rahmen der Durchführung des vorgeschlagenen Verfahrens bei Erreichen eines bestimmten Konzentrationsgrades des jeweiligen Fluidbestandteils die weitere Konzentrationserhöhung in jeweils einem Anlagenteil vorgenommen wird, dessen durchlässige Wände die jeweils andere Permeabilität haben. Hierdurch läßt sich unter anderem auch eine bemerkenswerte Verringerung der jeweils zu fördernden Fluidmengen erreichen.

Gegenstand der Erfindung ist naturgemäß auch eine Anlage zur Durchführung des Verfahrens mit einer den jeweiligen Verfahrensschritten angepaßten Auslegung, Anordnung und Schaltung von Permeationsstufen und Förderorganen.

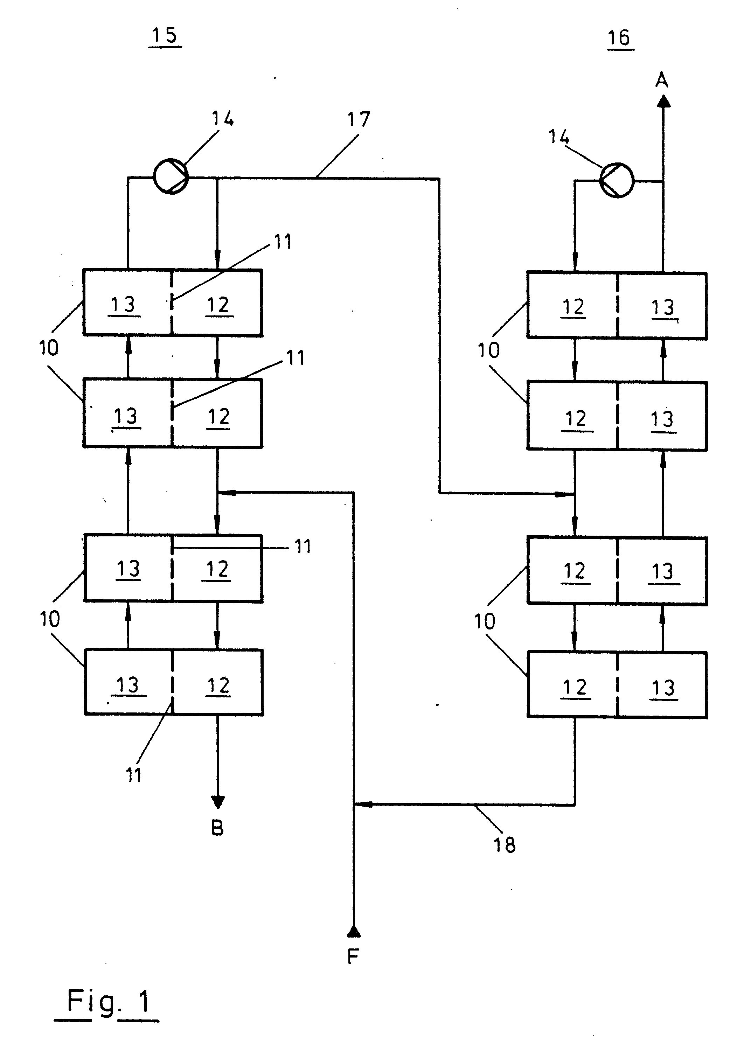

Nachfolgend werden besonders bevorzugte Ausführungsformen der Erfindung anhand einer Zeichnung näher beschrieben. Die Fig. 1—5 der Zeichnung zeigen in schematischer Darstellung jeweils eine zur Durchführung des Verfahrens dienende und der jeweiligen Verfahrensvariation angepaßte Anlage.

In allen Figuren ist die Zuführungsstelle für das zu trennende Fluid durch den Buchstaben F bezeichnet. Der in diesem enthaltene stärker permeierende Anteil bzw. das entsprechende Endprodukt ist mit dem Buchstaben A bezeichnet, während der weniger stark permeierende Bestandteil bzw. ein weiteres Endprodukt mit dem Buchstaben B bezeichnet ist.

Bei den in den Figuren 1 bis 5 dargestellten Anlagen hat jeweils eine Permeationsstufe 10 eine durchlässige Wand 11, die die Permeationsstufe 10 in einen Zulaufteil 12 und einen Permeatteil 13 unterteilt. Zum Abziehen des Permeats aus einem Permeatteil 13 dient jeweils ein Förderorgan 14, das das abgezogene Permeat in den Zulaufteil 12 zurückführt. Der schneller permeierende Bestandteil A wird die Wand 11 im einlaufseitigen Bereich des Zulaufteils 12 in stärkerem Maße durchsetzen, so daß sich die größte Konzentration für den Anteil A an entsprechender Stelle im Permeatteil 13 ergibt. In Richtung auf das gegenüberliegende Ende der Wand 11 wird die Konzentration des Bestandteils A im Zulaufteil 12 immer mehr abnehmen, während sich die Konzentration des Bestandteils B entsprechend erhöht und am Ende der Wand den höchsten Wert erreicht. Deshalb kann dort der Bestandteil B als End- oder Zwischenprodukt abgezogen werden, während man den Bestandteil A an der dem Förderorgan 14 zugeordneten Seite des Permeatteils entnehmen wird.

Die insgesamt erforderliche Austausch- bzw. Wandfläche ist auf jeweils vier Permeationsstufen 10 verteilt. Es sind die Zulaufteile 12 der Permeationsstufen 10 in der einen Richtung und die Permeatteile 13 in der anderen Richtung hintereinander geschaltet, so daß sich ein entsprechender Umlauf des eingespeisten Fluids F ergibt. Eine beliebige Zusammensetzung der jeweils durch Einzelmodule gebildeten Permeationsstufen 10 nach dem Baukastenprinzip ist ohne weiteres möglich.

Für alle Ausführungsformen gilt, daß das Fluid F in die aus den Einlaufteilen 12 gebildete Reihenschaltung jeweils dort eingegeben wird, wo die Konzentration der Fluidbestandteile im Umlauf etwa der Konzentration des eingespeisten Fluids F entspricht. Hierdurch wird erreicht, daß das Konzentrationsgleichgewicht des im Umlauf befindlichen Fluids durch die Hinzugabe weiterer Fluidmengen so wenig wie möglich gestört wird. Zur Erzielung einer bestimmten Trennleistung kommt man deshalb mit kleineren Austauschflächen und einem verringerten Volumen an umlaufendem Fluid aus.

Die in Fig. 1 dargestellte Anlage ist in zwei Anlagenteile 15 und 16 unterteilt, von denen jede vier Permeationsstufen 10 und ein Förderorgan 14 aufweist.

Das zu trennende Fluid wird in dem ersten Anlagenteil 15 in die Hintereinanderschaltung der Zulaufteile 12 eingegeben. Das aus dem letzten der hintereinander geschalteten Permeatteile 13 durch das Förderorgan 14 abgezogene Fluid wird teilweise in den Zulaufteil 12 derselben Permeationsstufe 10 zurückgeführt, während ein anderer Teil in die Hintereinanderschaltung der Zulaufteile 12 des zweiten Anlagenteils 16 dort eingegeben wird, wo die Bestandteile A und B jeweils in möglichst gleicher Konzentration wie in dem an dieser Stelle zugeführten Fluidstrom vorhanden sind. Die Zuleitung dieses Fluidstromanteils erfolgt über eine Leitung 17.

Über eine Leitung 18 wird am Ende der aus den Zulaufteilen 12 des Anlagenteils 16 gebildeten Reihenschaltung ein Fluidstromanteil abgezogen, der in die Reihenschaltung der Zulaufteile 12 des ersten Anlagenteils 15 an derselben Stelle zugegeben wird, an der auch die Fluidzufuhr erfolgt. Alternativ ist es noch denkbar, die Leitung 18 ausgangsseitig im Bereich dieser Reihenschaltung an anderer Stelle anzuschließen, was gegebenenfalls bei entsprechender Konzentration der Bestandteile A und B in dem abgezogenen Fluidstromanteil zur Gewährleistung möglichst geringer Konzentrationsunterschiede an der Zugabestelle zweckmäßig sein kann. Das mit dem Bestandteil A angereicherte Endprodukt wird am Ende der Hintereinanderschaltung aus den einzelnen Permeatteilen 13 bzw. an der Unterdruckseite des Förderorgans 14 im zweiten Anlagenteil 16 abgezogen, während das mit dem Bestandteil B angereicherte Endprodukt am Ende der aus den Zulaufteilen 12 des ersten Anlagenteils 15 gebildeten Hintereinanderschaltung entnommen wird.

Für den Betrieb der Anlage soll nachfolgend ein Beispiel gegeben werden:

Es sei zur Aufgabe gestellt, als Luft $CO_2$ abzutrennen. Hierbei sollen zehn mol/h Luft mit 0,1 mol-Anteilen $CO_2$ so zerlegt werden, daß 90%iges $CO_2$ und Luft mit einem Restanteil von 1% $CO_2$ anfallen.

Wenn man diese Aufgabenstellung mit einer als Recycling-Kaskade bekannten Schaltungsanordnung lösen will, so ist hierfür eine Gesamt-Austauschfläche von 7,62 m² notwendig. Der Flächenbedarf ist also verhältnismäßig groß. Es stellt sich ein Kompressionsstrom von 87,2 mol/h ein. Insgesamt werden aber zehn Förderorgane benötigt.

Verwendet man zur Lösung derselben Aufgabenstellung eine Anlage nach Fig. 1, so ergeben sich wesentliche Vorteile. Man benötigt jetzt nur zwei Förderorgane bzw. Kompressoren. Der Gesamt-Kompressionsstrom stellt sich auf nur 80 mol/h ein, während die Austauschfläche nur 2,26 m² betragen muß. Das $CO_2$ als besser permeierender Bestandteil A wird in der gewünschten Konzentration an der angegebenen Stelle abgenommen. Die demgegenüber weniger gut permeierenden Bestandteile der Luft, insbesondere Stickstoff und Sauerstoff, entsprechend dem mit B bezeichneten Bestandteil des Fluids.

Die entsprechend von $CO_2$ befreite Luft wird also an der mit B bezeichneten Stelle abgezogen.

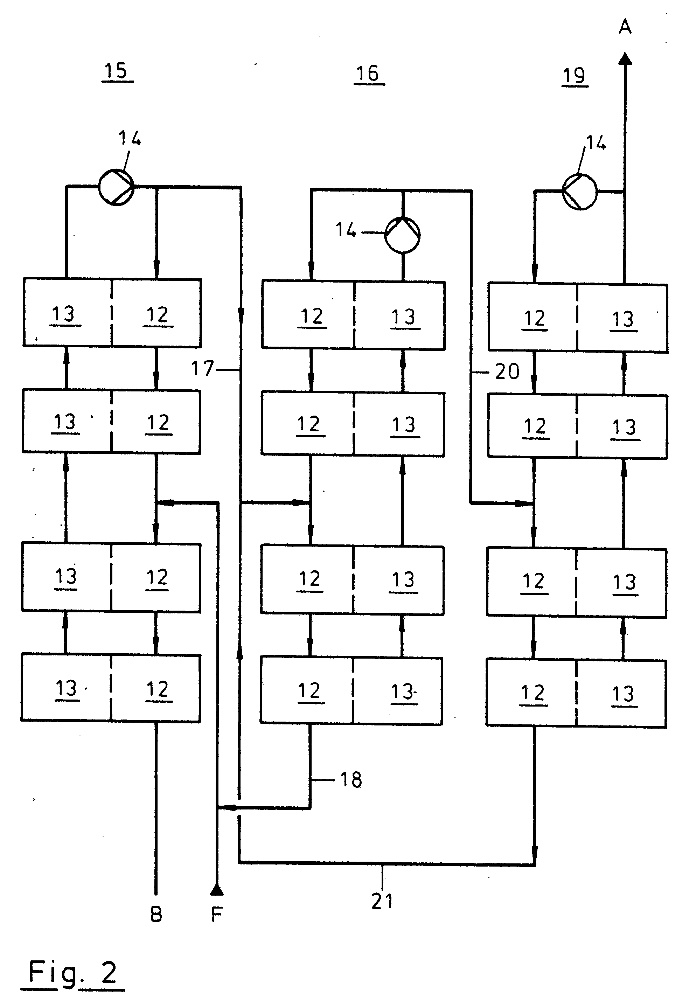

Eine Weiterentwicklung der Anlage nach Fig. 1 ist in Fig. 2 dargestellt. Hier ist ein zusätzlicher Anlagenteil 19 vorgesehen, dessen Aufbau demjenigen der Anlagenteile 15 und 16 entspricht. Ein Vergleich mit der Anlage nach Fig. 1 ergibt folgendes:

Das von den Permeatteilen 13 des zweiten Anlagenteils 16 abgezogene Fluid wird teilweise über eine weitere Leitung 20 in die aus den Zulaufteilen 12 des dritten Anlagenteils 19 gebildete Reihenschaltung eingegeben, und zwar ebenfalls wieder an einer Stelle, an der die Bestandteile des zugegebenen Fluidstromanteils in ihrer Konzentration derjenigen Konzentration entsprechen, die an der Zugabestelle bereits vorhanden ist. Das Ende der aus den Zulaufteilen 12 des Anlagenteils 19 gebildeten Hintereinanderschaltung ist über eine Leitung 21 mit der Leitung 7 verbunden, über die ein Fluidstromanteil vom Anlagenteil 15 in den Anlagenteil 16 geführt wird. Die Konzentration der über die Leitung 21 aus dem Anlagenteil 19 abgezogenen Fluidbestandteile ist so vorgegeben, daß ein möglichst geringer Unterschied zu den Konzentrationen der entsprechenden Bestandteile am Zugabepunkt im Anlagenteil 16 vorhanden ist.

Das entsprechend der Aufgabenstellung mit $CO_2$ angereicherte Endprodukt wird an der mit A bezeichneten Stelle dem dritten Anlagenteil 19 entnommen.

Trotz zusätzlicher Verwendung eines dritten Förderorgans ergibt sich eine weitere Verringerung des erforderlichen Aufwandes, wenn man die in der Aufgabenstellung angegebenen Anreicherungsgrenzen als Parameter beibehält.

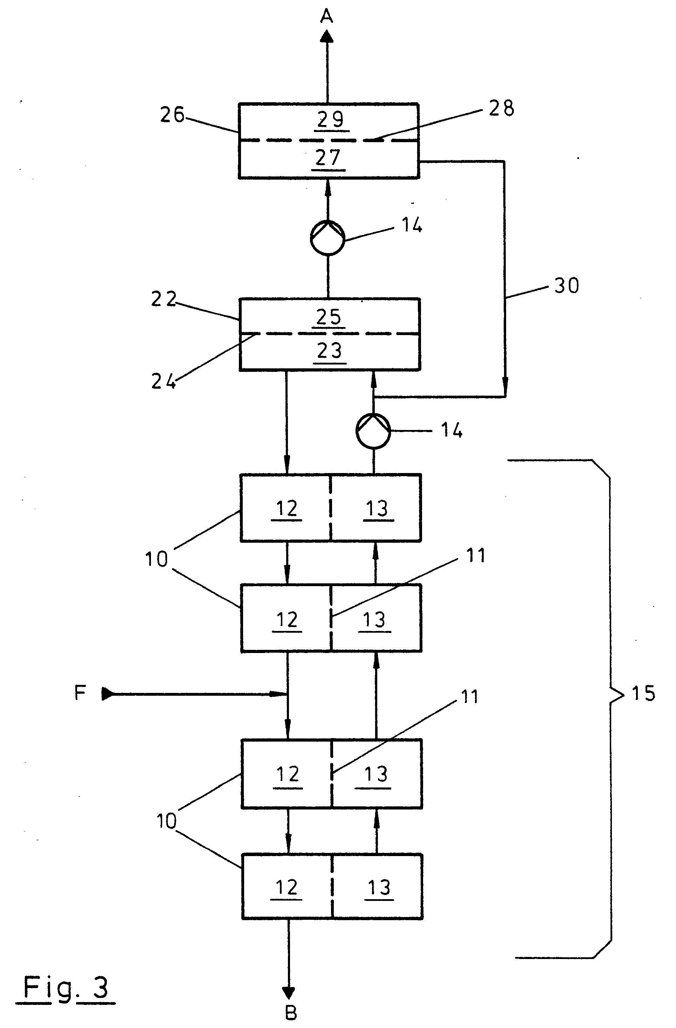

Fig. 3 zeigt eine weitere Variation für eine zur Durchführung des vorgeschlagenen Verfahrens geeignete Anlage. Diese hat einen Anlagenteil 15 in einer Ausführung entsprechend Fig. 1. Das aus der Hintereinanderschaltung der Permatteile 13 mit Hilfe des Förderorgans 14 abgezogene Permeat wird jetzt aber zunächst in eine erste Zusatzstufe 22 gegeben, und zwar in den Zulaufteil 23 derselben. Von dort aus wird der entsprechende Fluidstrom zu der aus den Zulaufteilen 12 gebildeten Reihenschaltung geleitet. Der besser permeierende Bestandteil A tritt durch die durchlässige Wand 24 der Zusatzstufe 22 hindurch und kann in einer ersten Alternative bereits dem Zulaufteil 23 als Endprodukt entnommen werden, wie es durch den gestrichelten Pfeil A' angedeutet ist. In diesem Fall ist der Permeatteil 25 der Zusatzstufe 22 nicht Bestandteil eines Fluidumlaufes, wie es an sich für Permeationsstufen charakteristisch ist, die in bekannten Kaskadenschaltungen verwendet werden. Es hat sich jedoch herausgestellt, daß die Verwendung einer solchen zusätzlichen Permeationsstufe im Bereich hoher Konzentrationen der besser permeierenden Phase vorteilhafter ist, weil sich eine Verkleinerung der notwendigen Austauschflächen ergibt. Dies wird insbesondere deutlich, wenn der Permeatteil 25 der ersten Zusatzstufe 22 über ein weiteres Förderorgan 14 mit einer zweiten Zusatzstufe 26 verbunden wird, die in ihrem Aufbau der Zusatzstufe 22 entspricht und einen Zulaufteil 27, eine durchlässige Wand 28 und einen Permeatteil 29 aufweist. Der in den Zulaufteil 27 der zweiten Zusatzstufe 26 eingegebene Fluidstrom kann über eine Leitung 30 zur Eingangsseite des Zulaufteils 23 der ersten Zusatzstufe 22 zurückgeführt werden. Wenn diese Rückführung auch im Rahmen des vorliegenden Beispiels vorgesehen ist, so ist sie doch nicht unbedingt erforderlich. Es wird im Einzelfall zu überprüfen sein, inwieweit diese Rückführung zur Erzielung weiterer Verbesserungen beitragen kann.

Bei dem hier beschriebenen Beispiel wird dann der mit $CO_2$ angereicherte Bestandteil A dem Permeatteil 29 der zweiten Zusatzstufe 26 entnommen, der ebenfalls wie der Permatteil 25 der ersten Zusatzstufe 22 nicht in einen Umlauf einbezogen ist.

In dieser letztgenannten Ausführung ergibt sich im Rahmen der bereits genannten Aufgabenstellung, daß für die vorgegebene $CO_2$-Anreicherung nur zwei Förderorgane 14 bzw. Kompressoren erforderlich sind. Der Kompressionsstrom stellt sich auf 49,1 mol/h ein, während die erforderliche Austauschfläche nur 1,9 m² beträgt.

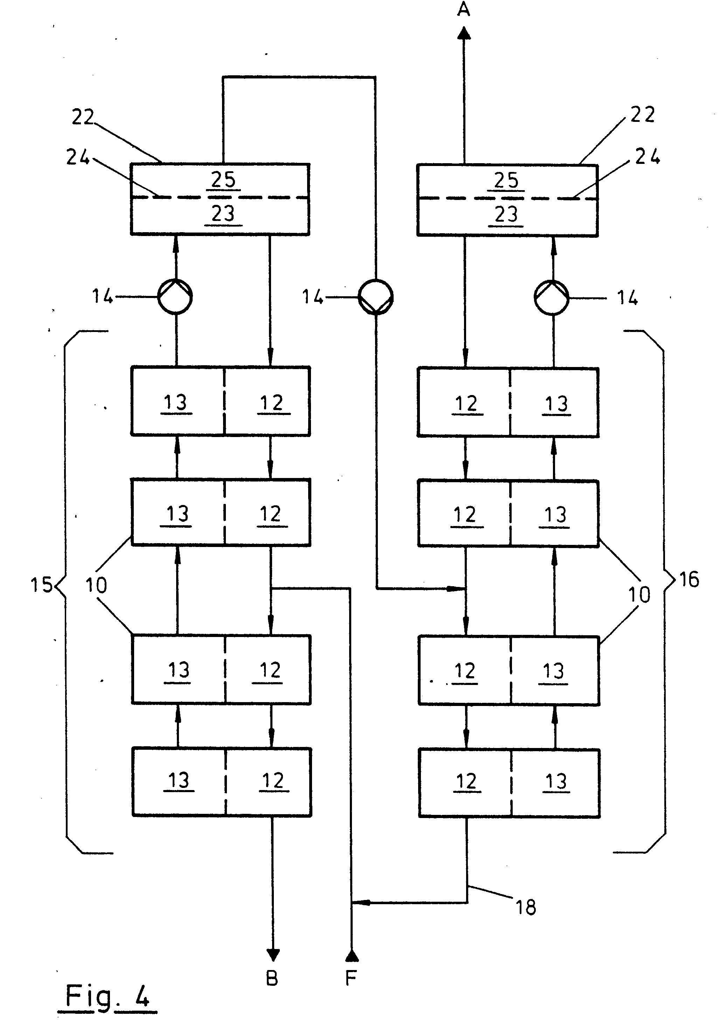

Eine nächste Ausführungsform ist in Fig. 4 dargestellt. Es sind zwei Anlagenteile 15 und 16 vorgesehen, die in ihrem grundsätzlichen Aufbau genauso ausgeführt sind wie die entsprechenden Anlagenteile der zuvor beschriebenen Anlagen. Beiden Anlagenteilen 15 und 16 ist jeweils eine erste Zusatzstufe 22 nachgeschaltet, und zwar in derselben Weise, wie es für die erste Alternative gemäß Fig. 3 bei der Verwendung nur einer Zusatzstufe beschrieben wurde. Dem Permeatteil 25 der dem Anlagenteil 15 nachgeschalteten ersten Zusatzstufe 22 wird das dort anfallende Permeat entnommen. Es gelangt über ein weiteres Förderorgan 14 und eine Leitung 31 zum zweiten Anlagenteil 16, wo es in die Hintereinanderschaltung der Zulaufteile 12 an einer Stelle eingegeben wird, an der die Konzentrationsunterschiede der Bestandteile möglichst niedrig sind. Das Ende der aus den Zulaufteilen 12 des Anlagenteils 16 gebildeten Hintereinanderschaltung ist wie bei der Ausführungsform nach Fig. 1 wieder über eine Leitung 18 mit dem ersten Anlagenteil 15 verbunden, so daß der abgezogene weniger gut permeierende Bestandteil in die aus den Zulaufteilen 12 des ersten Anlagenteils gebildete Hintereinanderschaltung eingegeben wird, und zwar an der gleichen Stelle, an der auch die Zuführung weiteren Fluids erfolgt. Das entsprechend angereicherte $CO_2$ bzw. der Bestandteil A werden aus dem Permeatteil 25 der Zusatzstufe 22 abgezogen, die dem zweiten Anlagenteil 16 nachgeschaltet ist.

Bei Verwendung einer derart aufgebauten Anlage ergibt sich im Rahmen der genannten Aufgabenstellung ein Kompressionsstrom von 43,9 mol/h bei einer Gesamt-Austauschfläche von nur 1,78 $m^2$, wobei zur Umwälzung des Fluids drei Förderorgane 14 bzw. Kompressoren erforderlich sind.

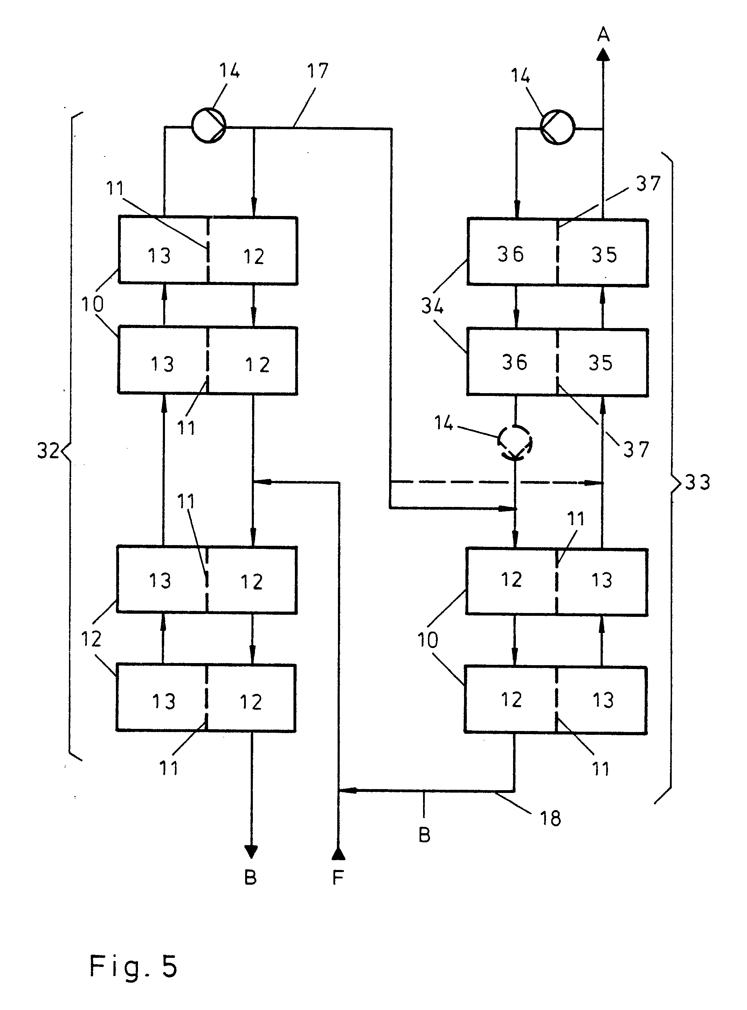

Eine nächste Ausführungsform ist in Fig. 5 dargestellt. Ein erster Anlagenteil 32 enthält zwei Permeationsstufen 10 mit jeweils einem Einlaufteil 12, einem Permeatteil 13 und einer Wand 11, die wie in allen zuvor beschriebenen Beispielen für den Bestandteil A des zugeführten Fluidstromes besser permeierbar ist.

Ein zweiter Anlagenteil 33 hat zwei Permeationsstufen 34, von denen jede einen Zulaufteil 35, einen Permeatteil 36 und eine durchlässige Wand 37 aufweist. Letztere ist im Gegensatz zu der Wand 11 so ausgelegt, daß sie für den Bestandteil B besser permeierbar ist.

Der Aufbau des ersten Anlagenteils 32 entspricht also dem Aufbau des Anlagenteils 15 in den zuvor beschriebenen Ausführungsbeispielen. Ein Teil des Permeats wird über das Förderorgan 14 an der der Entnahmeseite entsprechenden Seite des Einlaufteils 12 derselben Permeatstufe 10 zurückgeführt. Der andere Teil des Permeats wird über die Leitung 17 dem Anlagenteil 33 zugeführt. Wie Fig. 5 erkennen läßt, sind die Zulaufteile 36 der Permeationsstufen 34 und die Zulaufteile 12 der Permeationsstufen 10 in Reihe geschaltet. Die Zuführung des Permeats über die Leitung 17 erfolgt an geeigneter Stelle in diese Reihenschaltung, wobei diese Stelle ebenfalls so gewählt ist, daß dort keine störend großen Konzentrationsunterschiede auftreten.

Am Ende dieser Reihenschaltung wird der schlechter permeierende Bestandteil B über die Leitung 18 entnommen und in die eingangsseitige Zuführung für das Fluid F eingegeben.

Die Permeatteile 13 der Permeationsstufen 10 und die Permeatteile 35 der Permeationsstufen 34 sind innerhalb des Anlagenteils 33 ebenfalls in Reihe geschaltet. Am Ende dieser Reihenschaltung wird der besser permeierende Bestandteil zu einem Teil als Endprodukt entnommen und zum einen Teil über ein weiteres Förderorgan 14 in die aus den Einlaufteilen 36 und 12 gebildete Reihenschaltung zurückgefördert.

Diese Schaltung kann auch dahingehend abgeändert werden, daß in die Reihenschaltung aus den Zulaufteilen 36 und 12 ein zusätzliches Förderorgan 14 eingeschaltet wird, was durch gestrichelte Darstellung angedeutet ist. Auch kann ein Teil des über die Leitung 17 zugeführten Fluids gegebenenfalls auch noch in die aus den Permeatteilen 13 und 35 gebildete Reihenschaltung eingegeben werden. Auch dies ist durch eine strichpunktierte Leitungsverbindung angedeutet.

Wie die vorstehende Beschreibung der einzelnen Ausführungsformen erkennen läßt, sind im Rahmen der Erfindung zahlreiche Variationen des vorgeschlagenen Verfahrens bzw. der entsprechend ausgebildeten Anlagen möglich. Im Einzelfall wird natürlich für jede Trennaufgabe das technische und wirtschaftliche Optimum jeweils bestimmt werden müssen. Dies gilt insbesondere im Hinblick auf die jeweils zweckmäßige bzw. vertretbare Anzahl der Förderorgane bzw. Kompressoren sowie auf die Größe des sich ergebenden Kompressionsstromes und der Gestamt-Austauschfläche.

Mit Hilfe des von der Erfindung vorgeschlagenen Verfahrens läßt sich eine ganze Reihe von Stofftrennproblemen lösen. Nachfolgend werden einige Beispiele für die Einsatzmöglichkeiten des Verfahrens sowohl bei der Gaspermeation als auch bei der Flüssigpermeation genannt:

Als Beispiele für technische Trennverfahren die unter Permeation in der Gasphase ablaufen, sind folgende Systeme zu nennen:

- He-, $H_2$-, $O_2$-, $CO_2$-, $SO_2$-, $NH_3$-Trennung aus Gasgemischen;
- Trennung gesättigter und ungesättigter Kohlenwasserstoffe;
- Abluft- und Abgasreinigung;
- $CH_4$-Anreicherung in $N_2$-haltigen Gasen;
- Abtrennung von Kernspaltedelgasen;
- Isotopentrennung;
- $O_2$-Anreicherung der Luft;
- $H_2$-Abtrennung aus der Abluft;
- $CO_2$-Beseitigung aus Raumluft.

Einsatzgebiete der Flüssigpermeationen sind zum Beispiel die

- Wasserabtrennung aus organischen Reaktionsgemischen und umgekehrt;
- Trennung von isomeren, azeotropen, thermisch labilen Gemischen, engsiedenden Gemischen;
- Abwasserreinigung.

Außerdem lassen sich zum Beispiel wertvolle organische und anorganische Bestandteile aus Wasser oder sonstigen Trägerfluiden einengen oder zurückgewinnen (Pharmazeutika).

Ähnlich der Gas- oder Gel-Chromatographie läßt sich mit dem erfindungsgemäßen Verfahren ein Stoffgemisch quantitativ trennen und so das Verfahren auch meßtechnisch nutzen.

Die Anwendung der Erfindung ist ferner denkbar zur Trennung von Medien, die sich zumindest teilweise in einer dampfförmigen Phase befinden oder durch Erwärmung in diese gebracht werden. Hierzu gehört beispielsweise die Möglichkeit der Trennung von Wasser-Alkoholgemischen, wobei der alkoholische Bestandteil dampfförmig durch die Membran hindurchtreten kann. Dieser Durchtritt durch die Membran wird auch als Pervaporation bezeichnet.

Ferner läßt sich die Erfindung im Zusammenhang mit Elektrolyse-Verfahren vorteilhaft anwenden. Als Beispiel hierfür sei die Chlor-Alkali-Elektrolyse nach dem Membranverfahren genannt. Bei vergleichbarer Stromausbeute lassen sich der Gesamtprozeß optimieren und die Kosten eines derartigen Verfahrens senken.

Die Erfindung hat also sehr umfassende Anwendungsgebiete. In allen Fällen wird die Menge des Rücklaufstromes im einzelnen von der jeweiligen Trennaufgabe abhängen. Hierbei sind die erforderliche Produktkonzentration, die Eigenschaften der jeweiligen Membran hinsichtlich Permeabilität und Selektivität sowie die Art und Größe der die Permeation hervorrufenden treibenden Gradienten die jeweils wesentlichen Parameter. Wenn diese Größen für den jeweiligen Einzelfall festgelegt sind, läßt sich die erforderliche Größe des Rücklaufstromes mit bekannten Rechenmethoden der thermischen Trenntechnik oder auch mit Hilfe von Erfahrungswerten bestimmen. Treibende Gradienten können durch Druckunterschiede und Konzentrationsunterschiede oder aber auch durch elektrische oder thermische Potentiale bzw. Dampfdrücke hervorgerufen sein.

Das von der Erfindung vorgeschlagene Verfahren läßt sich deshalb nicht nur für eine Trennung von Medien verwenden, die nur flüssig oder nur gasförmig sind. Auch kann das von der Erfindung vorgeschlagene Trennverfahren eingesetzt werden, indem Dämpfe aus Flüssigkeiten austreten und die Membranen durchsetzen.

Entscheidend ist es in allen Fällen, daß durch die Rückführung eines Teilstroms in die Zellen bzw. Module selbst bei sehr hohen und bei sehr niedrigen Konzentrationen das treibende Gefälle über die Membran erhalten bleibt.

## Patentansprüche

1. Verfahren zur Trennung von Fluiden durch Permeation in mindestens zwei Permeationsstufen (10), die mit einer für diese Fluide oder ihre Bestandteile unterschiedlich durchlässigen Wand (11) ausgerüstet sind und die durch die Wand (11) in einen Zulaufteil (12) und einen Permeatteil (13) unterteilt werden, wobei in einer ersten Permeationsstufe (10) das zugeführte Fluid und das Permeat in Gegenstrom an der Wand (11) entlanggeführt werden und wobei der stärker permeierende Bestandteil an einem Ende der Wand (11) dieser ersten Permeationsstufe (10) aus dem Permeatteil (13) abgezogen und teilweise am gleichen Ende der Wand (11) in den Zulaufteil (12) zurückgeführt und teilweise entnommen wird, dadurch gekennzeichnet, daß der entnommene Teil des stärker permeierenden Bestandteils in den Zulaufteil (12, 36) einer zweiten Permeationsstufe (10, 34) geleitet wird und daß das Permeat in der zweiten Permeationsstufe (10, 34) ebenfalls im Gegenstrom an der Wand (11, 37) dieser Stufe entlanggeführt und teilweise über ein Förderorgan (14) in den Zulaufteil (12, 36) der zweiten Permeationsstufe (10) zurückgeführt und teilweise als Produkt entnommen wird.

2. Verfahren zur Trennung von Fluiden durch Permeation in mindestens zwei Permeationsstufen, die mit einer für diese Fluide oder ihre Bestandteile unterschiedlich durchlässigen Wand (11) ausgerüstet sind und die durch die Wand (11) in einen Zulaufteil (12) und einen Permeatteil (13) unterteilt werden, wobei in einer ersten Permeationsstufe (10) das zugeführte Fluid und das Permeat in Gegenstrom an der Wand (11) entlanggeführt werden und wobei der stärker permeierende Bestandteil an einem Ende der Wand (11) dieser ersten Permeationsstufe (10) aus dem Permeatteil abgezogen und teilweise am gleichen Ende der Wand (11) in den Zulaufteil (12) zurückgeführt und teilweise entnommen wird, dadurch gekennzeichnet, daß der entnommene Teil des stärker permeierenden Bestandteils in den Zulaufteil (23) einer Zusatzstufe (22) geleitet und von dieser aus in den Zulaufteil (12) der ersten Permeationsstufe (10) zurückgeführt wird, daß dem Permeatteil (25) der Zusatzstufe (22) eine weitere Zusatzstufe (26) nachgeschaltet ist, deren Permeatteil (29) der stärker permeierende Bestandteil entnommen wird, und daß der Zulaufteil (27) der weiteren Zusatzstufe (26) ausgangsseitig mit dem Ausgang des Permeatteils (13) der ersten Permeationsstufe (10) verbunden ist.

3. Verfahren nach Anspruch 1 oder 2, dadurch gekennzeichnet, daß das Fluid zwischen den hintereinander geschalteten Zulaufteilen (12) dort zugeführt wird, wo die Konzentration des im Umlauf befindlichen Fluids etwa der Konzentration der zugeführten Fluidbestandteile entspricht.

4. Verfahren nach einem der vorherigen Ansprüche, dadurch gekennzeichnet, daß der aus dem Zulaufteil (12) der zweiten Permeationsstufe (10) abgezogene Fluidstrom in den Zulaufteil (12) der ersten Permeationsstufe (10) zurückgeführt wird.

5. Verfahren nach einem der vorherigen Ansprüche, dadurch gekennzeichnet, daß zwei jeweils aus mehreren hintereinander geschalteten Permeationsstufen (10) gebildete Anlagenteile (15, 16) so miteinander verbunden werden, daß der nicht in den Zulaufteil (12) einer Permeationsstufe (10) im ersten Anlagenteil (15) zurückgeführte Fluidstrom in die Hintereinanderschaltung der dem zweiten Anlagenteil (16) zugeordneten Zulaufteile (12) dort zugeführt wird, wo die Konzentration des im Umlauf befindlichen Fluids etwa der Konzentration der zugeführten Fluidbestandteile entspricht.

6. Verfahren nach Anspruch 5, dadurch gekennzeichnet, daß der an den Zulaufteilen (12) des zweiten Anlagenteils (16) abgenommene Fluidstrom in die Hintereinanderschaltung der Zulaufteile (12) des ersten Anlagenteils (15) dort zugeführt wird, wo die Konzentration des im Umlauf befindlichen Fluids etwa der Konzentration der in diesem Fluidstrom enthaltenen Bestandteile entspricht.

7. Verfahren nach einem der vorherigen Ansprüche, dadurch gekennzeichnet, daß der aus dem Permeatteil (13) der ersten Permationsstufe (10) oder des ersten Anlagenteils (15) abgezogene Fluidstrom zumindest teilweise über den Zulaufteil (23) einer Zusatzstufe (22) in den Zulaufteil (12) der ersten Permeationsstufe (10) oder eines ersten Anlagenteils (15) zurückgeführt wird, daß das in der Zusatzstufe (22) anfallende Permeat in den Zulaufteil (12) einer zweiten Permeationsstufe (10) oder eines zweiten Anlagenteils (16) eingespeist wird und daß der aus dem letztgenannten Zulaufteil (12) abgezogene weniger permeierende Bestandteil den Zulaufteil (12) der ersten Permeationsstufe (10) oder des ersten Anlagenteils (15) zugeführt wird.

8. Verfahren nach einem der vorliegenden Ansprüche, dadurch gekennzeichnet, daß mindestens zwei Permeationsstufen (10, 34) oder aus jeweils mehreren Permeationsstufen (10, 34) gebildete Anlagenteile (32, 33) vorgesehen sind und daß in den Permeationsstufen (10, 34) oder Anlagenteilen (32, 33) enthaltene durchlässige Wände (11, 37) unterschiedliche permeabilitätseigenschaften haben, derart, daß jeweils für unterschiedliche Bestandteile des Fluids eine stärkere Permeabilität vorhanden ist.

9. Verfahren nach Anspruch 8, dadurch gekennzeichnet, daß zwei Permeationsstufen (10, 34) oder aus mehreren Permeationsstufen (10, 34) aufgebaute Anlagenteile (32, 33) mit einer ersten und einer zweiten Permeabilität der durchlässigen Wände (11, 37) vorgesehen sind, derart, daß der Permeatteil (13) der Permeationsstufe (10) oder des Anlagenteils (32) mit der ersten Permeabilität über ein Förderorgan (14) mit dem Zulaufteil (35) der zweiten Permeationsstufe (34) oder des zweiten Anlagenteils (33) mit der zweiten Permeabilität verbunden ist und daß die Permeatteile der zweiten Permeationsstufe (34) oder des zweiten Anlagenteils (33) über ein weiteres Förderorgan (14) mit dem Zulaufteil (12) der ersten Permeationsstufe (10) oder des ersten Anlagenteils (32) in Verbindung stehen, wobei die Produktströme jeweils an den Enden der Zulaufteile (12, 35) abgezogen werden.

10. Anlage zur Trennung von Fluiden durch Permeation in mindestens zwei Permeationsstufen (10), die mit einer für diese Fluide oder ihre Bestandteile unterschiedlich durchlässigen Wand (11) ausgerüstet sind und die durch die Wand (11) in einen Zulaufteil (12) und einen Permeatteil (13) unterteilt werden, wobei in einer ersten Permeationsstufe (10) das zugeführte Fluid und das Permeat in Gegenstrom an der Wand (11) entlanggeführt werden und wobei der stärker permeierende Bestandteil an einem Ende der Wand (11) dieser ersten Permeationsstufe (10) aus dem Permeatteil (13) abgezogen und teilweise am gleichen Ende der Wand (11) in den Zulaufteil (12) zurückgeführt und teilweise entnommen wird, dadurch gekennzeichnet, daß der entnommene Teil des stärker permeierenden Bestandteils in den Zulaufteil (12, 36) einer zweiten Permeationsstufe (10, 34) geleitet wird und daß das Permeat in der zweiten Permeationsstufe (10, 34) ebenfalls im Gegenstrom an der Wand (11, 37) diese Stufe entlanggeführt und teilweise über ein Förderorgan (14) in den Zulaufteil (12, 36) der zweiten Permeationsstufe (10) zurückgeführt und teilweise als Produkt entnommen wird.

11. Anlage zur Trennung von Fluiden durch Permeation in mindestens zwei Permeationsstufen, die mit einer für diese Fluide oder ihre Bestandteile unterschiedlich durchlässigen Wand (11) ausgerüstet sind und die durch die Wand (11) in einen Zulaufteil (12) und einen Permeatteil (13) unterteilt werden, wobei in einer ersten Permeationsstufe (10) das zugeführte Fluid und das Permeat in Gegenstrom an der Wand (11) entlanggeführt werden und wobei der stärker permeierende Bestandteil an einem Ende der Wand (11) dieser ersten Permeationsstufe (10) aus dem Permatteil abgezogen und teilweise am gleichen Ende der Wand (11) in den Zulaufteil (12) zurückgeführt und teilweise entnommen wird, dadurch gekennzeichnet, daß der entnommene Teil des stärker permeierenden Bestandteils in den Zulaufteil (23) einer Zusatzstufe (22) geleitet und von dieser aus in den Zulaufteil (12) der ersten Permationsstufe (10) zurückgeführt wird, daß dem Permeatteil (25) der Zusatzstufe (22) eine weitere Zusatzstufe (26) nachgeschaltet ist, deren Permeatteil (29) der stärker permeierende Bestandteil entnommen wird, und daß der Zulaufteil (27) der weiteren Zusatzstufe (26) ausgangsseitig mit dem Ausgang des Permeatteils (13) der ersten Permeationsstufe (10) verbunden ist.

## Claims

1. Process for separating fluids by permeation in at least two permeation stages (10) which are fitted with a wall (11), which has different permeabilities for these fluids or their constituents, and are subdivided by the wall (11) into a feed section (12) and a permeate section (13), the fluid fed in and the permeate being passed, in a first permeation stage (10), in counter-current along the wall (11) and the more strongly permeating constituent being withdrawn from the permeate section (13) at one end of the wall (11) of this permeation stage (10) and being partially recycled at the same end of the wall (11) into the feed section (12) and partially taken off, characterised in that the part, which has been taken off, of the more strongly permeating constituent is passed into the feed section (12, 36) of a second permeation stage (10, 34), and that the permeate in the second permeation stage (10, 34) is likewise passed along the wall (11, 37) of this stage in counter-current and is partially recycled via a conveying element (14) into the feed section (12, 36) of the second permeation stage (10) and partially taken off as the product.

2. Process for separating fluids by permeation in at least two permeation stages which are fitted with a wall (11), which has different permeabilities for these fluids or their constituents, and are subdivided by the wall (11) into a feed section (12) and a permeate section (13), the fluid fed in and the permeate being passed, in the first permeation stage (10), in counter-current along the wall (11) and the more strongly permeating constituent being withdrawn from the permeate section at one end of the wall (11) of this first permeation stage (10) and being partially recycled at the same end of the wall (11) into the feed section (12) and partially taken off, characterised in that the part, which has been taken off, of the more strongly permeating constituent is passed into the feed section (23) of an additional stage (22) and is recycled from the latter into the feed section (12) of the first permeation stage (10), that, downstream of the permeate section (25) of the additional stage (22), a further additional stage (26) is provided, from the permeate section (29) of which the more strongly permeating constituent is taken off, and that the feed section (27) of the further additional stage (26) is connected on the outlet side to the outlet of the permeate section (13) of the first permeation stage (10).

3. Process according to claim 1 or 2, characterised in that the fluid is fed in between the feed sections (12) arranged in series, at the point where the concentration of the fluid being circulated approximately corresponds to the concentration of the fluid constituents being fed in.

4. Process according to one of the preceding claims, characterised in that the fluid stream withdrawn form the feed section (12) of the second permeation stage (10) is recycled into the feed section (12) of the first permeation stage (10).

5. Process according to one of the preceding claims, characterised in that two parts (15, 16) on the unit, which are each formed from several permeation stages (10) arranged in series, are mutually connected in such a way that the fluid stream, which is not reclcled into the feed section (12) of a permeation stage (10) in the first part (15) of the unit, is fed into the series arrangement of the feed sections (12) allocated to the second part (16) of the unit, at the point where the concentration of the fluid being circulated approximately corresponds to the concentration of the fluid constituents being fed in.

6. Process according to claim 5, characterised in that the fluid stream, withdrawn at the feed sections (12) of the second part (16) of the unit, is fed into the series arrangement of the feed sections (12) of the first part (15) of the unit, at the point where the concentration of the fluid being circulated approximately corresponds to the concentration of the constituents contained in this fluid stream.

7. Process according to one of the preceding claims, characterised in that the fluid stream, withdrawn from the permeate section (13) of the first permeation stage (10) or of the first part (15) of the unit, is at least partially recycled via the feed section (23) of an additional stage (22) into the feed section (12) of the first permeation stage (10) or of a first part (15) of the unit, that the permeate obtained in the additional stage (22) is fed into the feed section (12) of a second permeation stage (10) or of a second part (16) of the unit, and that the less strongly permeating constituent, withdrawn from the last mentioned feed section (12), is fed to the feed section (12) of the first permeation stage (10) or fo the first part (15) of the unit.

8. Process according to one of the preceding claims, characterised in that at least two permeation stages (10, 34), or parts (32, 33) of the unit, which are each formed from several permeation stages (10, 34), are provided, and that permeable walls (11, 37) present in the permeation stages (10, 34) or parts (32, 33) of the unit have different permeability properties, in such a way that higher permeability is available for each of the different constituents of the fluid.

9. Process according to claim 8, characterised in that two permeation stages (10, 34), or parts (32, 33) of the unit, which are built up from several permeation stages (10, 34) and have a first and a second permeability of the permeable walls (11, 37), are provided, in such a way that the permeate section (13) of the permeation stage (10) or of the part (32) of the unit, having the first permeability, is connected via a conveying element (14) to the feed section (35) of the second permeation stage (34) or of the second part (33) of the unit, having the second permeability, and that the permeate sections of the second permeation stage (34) or of the second part (33) of the unit are connected via a further conveying element (14) to the feed section (12) of the first permeation stage (10) or of the first part (32) of the unit, the product streams each being withdrawn at the ends of the feed sections (12, 35).

10. Unit for separating fluids by permeation in at least two permeation stages (10) which are fitted with a wall (11), which has different permeabilities for these fluids or their constituents, and are subdivided by the wall (11) into a feed section (12) and a permeate section (13), the fluid fed in and the permeate being passed, in a first permeation stage (10), in counter-current along the wall (11) and the more strongly permeating constituent being withdrawn from the permeate section (13) at one end of the wall (11) of this first permeation stage (10) and being partially recycled at the same end of the wall (11) into the feed section (12) and partially taken off, characterised in that the parts which has been taken off, of the more strongly permeating constituent is passed into the feed section (12, 36) of a second permeation stage (10, 34) and that the permeate in the second permeation stage (10, 34) is likewise passed along the wall (11, 37) of this stage in counter-current and is partially recycled via a conveying element (14) into the feed section (12, 36) of the second permeation stage (10) and partially taken off as the product.

11. Unit for separating fluids by permeation in at least two permeation stages which are fitted with a wall (11), which has different permeabilities for these fluids or their constituents, and are subdivided by the wall (11) into a feed section (12) and a permeate section (13), the fluid fed in and the permeate being passed, in a first permeation stage (10), in counter-current along the wall (11) and the more strongly permeating constituent being withdrawn from the permeate section at one end of the wall (11) of this first permeation stage (10) and being partially recycled at the same end of the wall (11) into the feed section (12) and partially taken off, characterised in that the part, which has been taken off, of the more strongly permeating constituent is passed into the feed section (23) of an additional stage (22) and is recycled from the latter into the feed section (12) of the first permeation stage (10), that, downstream of the permeate section (25) of the additional stage (22), a further additional stage (26) is provided, from the permeate section (29) of which the more strongly permeating constituent is taken off, and that the feed section (27) of the further additional stage (26) is connected on the outlet side to the outlet of the permeate section (13) of the first permeation stage (10).

## Revendications

1. Procédé de séparation de fluides par perméation dans au moins deux étages de perméation (10) qui sont équipés d'une paroi (11) d'une perméabilité différente pour ces fluides ou leurs constituants et qui sont subdivisés, par cette paroi (11), en une partie d'alimentation (12) et en une partie de perméat (13) et, dans un premier étage de perméation (10) , le fluide acheminé et le perméat s'écoulent en contre-courant le long de la paroi (11), le constituant à plus forte perméation étant retiré de la partie de perméat (13) à une extrémité de la paroi (11) de ce premier étage de perméation (10), tandis qu'il est partillement recyclé à la même extrémité de la paroi (11) dans la partie d'alimentation (12) et partiellement soutirée caractérisé en ce que la partie soutirée du constituant à plus forte perméation est acheminée dans la partie d'alimentation (12, 36) d'un deuxième étage de perméation (10, 34), le perméat du deuxième étage de perméation (10, 34) passant également en contre-courant sur la paroi (11, 37) de cet étage en étant partiellement recyclé, via un organe de circulation (14), dans la partie d'alimentation (12, 36) du deuxième étage de perméation (10) et partiellemt soutiré comme produit.

2. Procédé de séparation de fluides par perméation dans au moins deux étages de perméation qui sont équipés d'une paroi (11) d'une perméabilité différente pour ces fluides ou leurs constituants et qui sont subdivisés, par cette paroi (11), en une partie d'alimentation (12) et en une partie de perméat (13) et, dans un premier étage de perméation (10), le fluide acheminé et le perméat s'écoulent en contre-courant le long de la paroi (11), le constituant à plus forte perméation étant retiré de la partie de perméat à une extrémité de la paroi (11) de ce premier étage de perméation (10), tandis qu'il est partiellement recyclé à la même extrémité de la paroi (11) dans la partie d'alimentation (12) et partiellement soutiré, caractérisé en ce que la partie soutirée du constituant à plus forte perméation est introduite dans la partie d'alimentation (23) d'un étage supplémentaire (22) d'où elle est recyclée dans la partie d'alimentation (12) du premier étage de perméation (10), un étage supplémentaire (26) étant monté en aval de la partie de perméat (25) de l'étage supplémentaire (22), le constituant à plus forte perméation étant soutiré de la partie de perméat (29) de cet étage supplémentaire et, côté sortie, la partie d'alimentation (27) de l'étage supplémentaire (26) est reliée à la sortie de la partie de perméat (13) du premier étage de perméation (10).

3. Procédé suivant la revendication 1 ou 2, caractérisé en ce que le fluide est acheminé entre les parties d'alimentation (12) montées l'une derrière l'autre, à l'endroit où la concentration du fluide se trouvant en circulation correspond à peu près à la concentration des constituants acheminés de ce fluide.

4. Procédé suivant une des revendications précédentes, caractérisé en ce que le courant de fluide retiré de la partie d'alimentation (12) du deuxième étage de perméation (10) est recyclé dans la partie d'alimentation (12) du premier étage de perméation (10).

5. Procédé suivant une des revendications précédentes, caractérisé en ce que deux parties d'installation (15, 16) formées chacune de plusieurs étages de perméation (10) montés l'un derrière l'autre, sont reliées l'une à l'autre de telle sorte que le courant de fluide non recyclé dans la partie d'alimentation (12) d'un étage de perméation (10) d'une première partie d'installation (15) soit acheminé dans le montage en série des parties d'alimentation (12) attribuées à la deuxième partie d'installation (16), à l'endroit où la concentration du fluide se trouvant en circulation correspond à peu près à la concentration des constituants acheminés de ce fluide.

6. Procédé siuvant la revendication 5, caractérisé en ce que le courant de fluide retiré aux parties d'alimentation (12) de la deuxième partie d'installation (16) est acheminé dans le montage en série des parties d'alimentation (12) de la première partie d'installation (15), à l'endroit où la concentration du fluide en circulation correspond à peu près à la concentration des constituants contenus dans ce courant de fluide.

7. Procédé suivant une des revendications précédentes, caractérisé en ce que le courant de fluide retiré de la partie de perméat (13) du premier étage de perméation (10) ou de la première partie d'installation (15) est recyclé au moins partiellement, via la partie d'alimentation (23) d'un étage supplémentaire (22), dans la partie d'alimentation (12) du premier étage de perméation (10) ou d'une première partie d'installation (15), le perméat se formant dans l'étage supplémentaire (22) étant introduit dans la partie d'alimentation (12) d'un deuxième étage de perméation (10) ou d'une deuxième partie d'installation (16), le constituant de moins bonne perméation retiré de la partie d'alimentation (12) mentionnée en dernier lieu étant acheminé à la partie d'alimentation (12) du premier étage de perméation (10) ou de la première partie d'installation (15).

8. Procédé suivant une des revendications précédentes, caractérisé en ce qu'on prévoit au moins deux étages de perméation (10, 34) ou deux parties d'installation (32, 33) constituées chacune de plusieurs étages de perméation (10, 34), tandis que les parois perméables (11, 37) refermées dans les étages de perméation (10, 34) ou les parties d'installation (32, 33) ont des propriétés de perméabilité deifférentes de telle sorte qu'il y ait chaque fois une plus forte perméabilité pour des constituants différents du fluide.

9. Procédé suivant la revendication 8, caractérisé en ce qu'on prévoit deux étages de perméation (10, 34) ou deux parties d'installation (32, 33) constituées de plusieurs étages de perméation (10, 34) et ayant des parois perméables (11, 37) d'une première et d'une deuxième perméabilité de telle sorte que la partie de perméat (13) de l'étage de perméation (10) ou de la partie d'installation (32) ayant la première perméabilité soit reliée, via un organe de circulation (14), à la partie d'alimentation (35) du deuxième étage de perméation (34) ou de la deuxième partie d'installation (33) ayant la deuxième perméabilité, les parties de perméat du deuxième étage de perméation (34) ou de la deuxième partie d'installation (33) étant reliées, via un organe de circulation supplémentaire (14), à la partie d'alimentation (12) du premier étage de perméation (10) ou de la première partie d'installation (32), les courants de produits étant chaque fois retirés aux extrémités des parties d'alimentation (12, 35).

10. Installation pour la séparation de fluides par perméation dans au moins deux étages de perméation (10) qui sont équipés d'une paroi (11) différemment perméable pour ces fluides ou leurs constituants et qui sont subdivisés, par cette paroi (11), en une partie d'alimentation (12) et une partie de perméat (13) et, dans un premier étage de perméation (10), le fluide acheminé et le perméat s'écoulent en contre-courant le long de la paroi (11), tandis que le constituant de plus forte perméation est retiré de la partie de perméat (13) à une extrémité de la paroi (11) de ce premier étage de perméation (10), tout en étant partiellement recyclé à la même extrémité de la paroi (11) dans la partie d'alimentation (12) et partiellement soutiré, caractérisée en ce que la partie soutirée du constituant de plus forte perméation est acheminée dans la partie d'alimentation (12, 36) d'un deuxième étage de perméation (10, 34) et le perméat se trouvant dans le deuxième étage de perméation (10, 34) s'écoule également en contre-courant le long de la paroi (11, 37) de cet étage, tout en étant partiellement recyclé, via un organe de circulation (14) dans la partie d'alimentation (12, 36) du deuxième étage de perméation (10) et partiellement soutiré comme produit.

1. Installation pour la séparation de fluides par perméation dans au moins deux étages de perméation qui sont équipés d'une paroi (11) différemment perméable pour ces fluides ou leurs constituants et qui sont subdivisés par cette paroi (11), en une partie d'alimentation (12) et en une partie de perméat (13) et, dans un premier étage de perméation (10) , le fluide acheminé et le perméat s'écoulent en contre-courant le long de la paroi (11), tandis que le constituant à plus forte perméation est retiré de la partie de perméat à une extrémité de la paroi (11) de ce premier étage de perméation (10), tout en étant partiellement recyclé à la même extrémité de la paroi (11) dans la partie d'alimentation (12) et partiellement soutiré, caractérisée en ce que la partie soutirée du constituant à plus forte perméation est introduite dans la partie d'alimentation (23) d'un étage supplémentaire (22) et de là, elle est recyclée dans la partie d'alimentation (12) du premier étage de perméation (10), un étage supplémentaire (26) étant monté en aval de la partie de perméat (25) de l'étage supplémentaire (22), le constituant à plus forte perméation étant soutiré de la partie de perméat (29) de cet étage supplémentaire (26) et, côté sortie, la partie d'alimentation (27) de l'étage supplémentaire (26) est reliée à la sortie de la partie de perméat (13) du premier étage de perméation (10).

Fig. 1

**Fig. 2**

Fig. 3

Fig. 4

Fig. 5